# EUROPÄISCHE PATENTSCHRIFT

(11) **EP 3 615 822 B1**
(45) Veröffentlichungstag und Bekanntmachung des Hinweises auf die Patenterteilung: **02.06.2021**
(21) Anmeldenummer: 17719576.5
(22) Anmeldetag: 25.04.2017
(51) Int. Cl.: F16D 1/08, F16D 1/108, F16C 3/02, F16D 3/12, F16D 1/064, F16D 1/10

(54) **WELLENVERBINDUNG UND ANTRIEBSWELLE MIT EINER SOLCHEN WELLENVERBINDUNG**
SHAFT CONNECTION AND INPUT SHAFT HAVING A SHAFT CONNECTION OF THIS KIND
LIAISON D'ARBRE ET ARBRE D'ENTRAINEMENT COMPRENANT UNE TELLE LIAISON D'ARBRE

(43) Veröffentlichungstag der Anmeldung: 04.03.2020
(73) Patentinhaber: GKN Driveline Deutschland GmbH, 63073 Offenbach (DE)
(72) Erfinder: CERMAK, Herbert, 63856 Bessenbach (DE)
(74) Vertreter: Neumann Müller Oberwalleney & Partner Patentanwälte
(86) Internationale Anmeldenummer: PCT/EP2017/059788
(87) Internationale Veröffentlichungsnummer: WO 2018/196960

(56) Entgegenhaltungen:
- EP-A1- 0 109 451
- DE-A1- 2 728 306
- DE-A1-102014 002 731
- DE-C1- 19 853 798
- GB-A- 1 330 313
- US-A- 4 380 443

## Beschreibung

Die Erfindung betrifft eine Wellenverbindung für eine Antriebswelle, insbesondere für einen Antriebsstrang eines Kraftfahrzeugs, sowie eine Antriebswelle mit einer solchen Wellenverbindung.

Bei der Konstruktion von Antriebswellen in Kraftfahrzeugen sind bei der Auslegung nicht nur die Anforderungen im normalen Betrieb zu berücksichtigen, vielmehr ist auch ihr Verhalten im "Crashfall" von Wichtigkeit. Dabei besteht für bestimmte Anwendungen die konstruktive Anforderung, dass sich die Antriebswelle im Crashfall axial verkürzen kann, um ein Ausknicken und Eindringen in die Fahrgastzelle zu vermeiden.

Aus der gattungsgemäßen DE 27 28 306 A1 ist eine Verbindung zwischen einem Universaldrehgelenk und einer Hohlwelle bekannt, die auf ein komplementär ausgestaltetes Endstück einer Gabel aufgeschoben und mit diesem verklebt wird. Zur Verbesserung der Klebstoffverteilung sind in der Außenfläche des Endstücks umlaufende Nuten vorgesehen. Die mit der Hohlwelle verbundene Gabel weist axial benachbart zum eingeschobenen Endstück Gabelabschnitte für das Zapfenkreuz mit gegenüber dem Endstück vergrößertem Durchmesser auf. Zum Schutz gegen axiales Lösen ist in die Gabel zwischen dem Endstück und dem Gabel-Basisteil eine Nut eingearbeitet. Die Nut weist eine in axialer Richtung von der Hohlwelle weg weisende Schulter auf, in die eine am freien Ende der Hohlwelle gebildete Lippe anliegt.

Aus der DE 199 43 880 C1 ist eine Längsantriebswelle bekannt, die als crashfähige Antriebswelle ausgelegt ist. Hierfür weist die Längsantriebswelle einen ersten Wellenabschnitt und einen zweiten Wellenabschnitt auf, die über ein Gleichlaufgelenk miteinander verbunden sind. Dabei ist der Kugelkäfig des Gleichlaufgelenks als Sollbruchstelle ausgelegt. Ein unfallbedingtes Verkürzen der Antriebswelle wird dadurch realisiert, dass der erste Wellenabschnitt, geführt durch das Außenteil des gebrochenen Gleichlaufgelenks, teleskopartig in das Wellenrohr des zweiten Wellenabschnitts einschiebbar ist.

Aus der DE 43 25 963 A1 ist eine Wellenverbindung zur Übertragung von Drehmomenten zwischen einer Hohlwelle aus Aluminiumwerkstoff und einem Anschlusszapfen bekannt, der in das offene Ende der Hohlwelle eingesetzt und an einem Anschlusselement fest angebracht ist. Der Anschlusszapfen ist mit Presspassung in die Hohlwelle eingepresst, wobei die Hohlwelle im Einpressbereich von einem Stütz- und Befestigungsring aus Stahl umfasst ist. Die Länge des Stütz- und Befestigungsrings auf der Hohlwelle ist größer als die Länge des Einpressbereichs des Anschlusszapfens in der Hohlwelle. Hierdurch wird bei axialer Krafteinleitung im Crashfall auf einem vergrö-βerten Verschiebeweg Energie in Form von Formänderungsarbeit und Reibung aufgenommen.

Aus der DE 30 07 896 A1 ist die Verbindung zwischen einem Anschlussflansch mit einer Außenverzahnung und einem Wellenrohr bekannt, in das der Anschlussflansch eingepresst wird. Das Wellenrohr ist als Faserverbund-Kunststoffrohr gestaltet.

Aus der US 4 807 351 B ist ein Verfahren zum Verbinden einer Gelenkgabel mit einem Wellenrohr bekannt. Hierfür wird zunächst ein Verstärkungsring unter Verwendung eines Formwerkzeugs auf das Wellenrohr aufgeschrumpft, wobei eine wellenartige Kontur erzeugt wird. Nach dem Ziehen des Formwerkzeugs wird anschließend die Gelenkgabel in den mit Verstärkungsring versehenen Endabschnitt des Wellenrohres eingepresst. Die Gelenkgabel hat eine flanschförmige Schulter, die mit dem Endabschnitt des Wellenrohrs axial zur Anlage kommt.

Der vorliegenden Erfindung liegt die Aufgabe zugrunde, eine verbesserte crashfähige Wellenverbindung für eine Antriebswelle vorzuschlagen, die eine definierte Axialkraft sicher übertragen, beziehungsweise schadensfrei aufnehmen kann. Die Aufgabe besteht weiter darin, eine entsprechende Antriebswelle mit einer solchen Wellenverbindung vorzuschlagen, die ein definiertes Crashverhalten aufweist.

Eine Lösung besteht in einer Wellenverbindung, insbesondere für einen Antriebsstrang eines Kraftfahrzeugs, umfassend: ein Wellenrohr aus einem Metallwerkstoff; einen Anschlusselement aus einem Metallwerkstoff, wobei das Anschlusselement einen Zapfenverbindungsabschnitt mit einer Außenverzahnung aufweist, die mit Presspassung in einen Rohrverbindungsabschnitt des Wellenrohrs eingepresst ist, wobei zwischen dem Wellenrohr und dem Anschlusselement eine in Umfangsrichtung wirksame formschlüssige Verbindung zur Drehmomentübertragung gebildet ist, wobei das Anschlusselement im Bereich der Außenverzahnung einen größten Außendurchmesser aufweist; wobei das Wellenrohr einen Axialverbindungsbereich aufweist, der in einen gegenüber der Außenverzahnung reduzierten Teilbereich des Zapfenverbindungsabschnitts nach radial innen eingeformt ist, so dass zwischen dem Wellenrohr und dem Anschlusselement eine in axialer Richtung wirksame formschlüssige Axialverbindung zur Übertragung von Axialkräften gebildet ist, wobei die formschlüssige Axialverbindung derart gestaltet ist, dass diese Axialkräfte von bis zu 5 kN schadensfrei aufnehmen kann.

Ein Vorteil besteht darin, dass die Wellenverbindung verbesserte Crasheigenschaften hat. Durch den Verzahnungseingriff zwischen der Außenverzahnung des Anschlusselements und der beim Einpressen erzeugten Gegenverzahnung des Wellenrohres ist eine erste funktionale Verbindung zwischen Anschlusselement und Wellenrohr gebildet. Diese ersten Verbindungsmittel wirken im Wesentlichen in Umfangsrichtung, das heißt sie bilden eine drehfeste Verbindung zur Drehmomentübertragung zwischen dem Anschlusselement und dem Wellenrohr. Durch den Formschlusseingriff zwischen dem in den verjüngten Teilbereich eingeformten Wellenrohrbereichs ist eine zweite funktionale Verbindung zwischen Anschlusselement und Wellenrohr gebildet. Diese zweiten Verbindungsmittel wirken im Wesentlichen in axiale Richtung, das heißt sie bilden eine Axialverbindung zwischen Wellenrohr und Anschlusselement. Im Falle einer auf die Wellenverbindung einwirkenden kleineren Axialkraft, beispielsweise aufgrund eines kleinen Aufpralls des Kraftfahrzeugs, welcher von der Stoßstange ohne nennenswerten Schaden für das Kraftfahrzeug aufgenommen werden kann, bleibt die Wellenverbindung aufgrund der zweiten Verbindungsmittel schadensfrei. Die einwirkende Axialkraft wird im Wesentlichen von den zweiten Verbindungsmitteln, das heißt von der formschlüssigen Axialverbindung zwischen Wellenrohr und Anschlusselement aufgenommen, beziehungsweise übertragen. Die Länge der Wellenverbindung bleibt dabei unverändert. Das Anschlusselement kann ein beliebiges kraftübertragendes Element sein, beispielsweise ein Zapfenteil, Adapterteil und/oder Gelenkteil eines Drehgelenks. Das Anschlusselement kann auch als Wellenzapfen oder Anschlusszapfen bezeichnet werden.

Das Einformen des Wellenrohres in den reduzierten Bereich des Anschlusselements kann beispielsweise durch Bördeln erfolgen. Der reduzierte Bereich des Anschlusselements kann beispielsweise durch eine Ringnut in einer Außenfläche des Verbindungsabschnitts gebildet sein.

Die axiale Haltekraft der formschlüssigen Axialverbindung kann nach Bedarf und Anforderung an die Wellenverbindung auf einen definierten Wert eingestellt werden. Die Größe der übertragbaren axialen Haltekraft lässt sich beispielsweise durch die Wandstärke des Wellenrohres im Bereich der Einformung und/oder die Tiefe der Einformung einstellen. Erfindungsgemäß ist die formschlüssige Axialverbindung so ausgelegt, beziehungsweise gestaltet, dass die Wellenverbindung Axialkräfte von bis zu 5 kN schadensfrei aufnehmen kann. Erst bei Überschreiten der axialen Haltekraft bewegen sich das Anschlusselement und das Wellenrohr relativ zueinander, wobei sich die Wellenverbindung verlängern und/oder verkürzen kann. Insofern kann die Haltekraft auch als Startkraft für die Relativbewegung und die axialen Verbindungsmittel auch als Startkraftmittel bezeichnet werden.

Für eine zuverlässige Verbindung kann optional ein Armierungsring verwendet werden, der vor dem Einpressen des Anschlusselements auf das Wellenrohr aufgeschoben wird. Durch den Armierungsring wird die Festigkeit der Verbindung zwischen Wellenrohr und Anschlusselement gesteigert, so dass die Verbindung höhere Kräfte und Momente übertragen beziehungsweise diesen standhalten kann.

Nach einer möglichen Ausführungsform sind die axialen Verbindungsmittel in beide axiale Richtungen wirksam, das heißt in Richtung des Wellenrohrs und des Anschlusselements aufeinander zu und voneinander weg. Insbesondere kann der Verbindungsabschnitt des Anschlusselements zwei axial benachbarte Außenverzahnungen aufweisen, zwischen denen eine umlaufende Ringnut vorgesehen ist, in die der Axialverbindungsbereich des Wellenrohres eingeformt ist. Die Axialverbindung wird durch den formschlüssigen Eingriff des Wellenrohres in die Ringnut gebildet, wobei der eingeformte Rohrbereich axial zwischen den beiden Außenverzahnungen eingefasst ist. Auf diese Weise ist das Wellenrohr in beide axiale Richtungen gegenüber dem Anschlusselement gesichert. Die Breite der Ringnut kann jeweils kleiner als die Breite der beiden Außenverzahnungen gestaltet sein. Es ist jedoch nach einer alternativen Ausführungsform auch denkbar, dass die axialen Verbindungsmittel so gestaltet sind, dass sie nur in eine axiale Richtung wirksam sind, das heißt aufeinander zu oder voneinander weg.

Im Falle, dass die axiale Haltekraft der Wellenverbindung überschritten wird, beispielsweise infolge eines Unfalls, können sich das Anschlusselement und das Wellenrohr teleskopartig relativ zueinander bewegen. Je nach Ausgestaltung des Wellenrohrs kann das Schiebe- und Kraftverhalten der Wellenverbindung in Richtung aufeinander zu und/oder voneinander weg gemäß den Anforderungen an das Crashverhalten eingestellt werden.

Beispielsweise kann das Wellenrohr nach einer ersten Möglichkeit einen im Wesentlichen konstanten Durchmesser zumindest in dem an den Endbereich anschließenden Rohrabschnitt, gegebenenfalls über die ganze Länge des Wellenrohres, aufweisen. In diesem Fall wird das Anschlusselement mit seiner Außenverzahnung aufgrund der unfallbedingten Axialkräfte weiter in das Wellenrohr eingepresst, wobei Stoßenergie aufgrund der Formänderungsarbeit absorbiert wird.

Nach einer weiteren Möglichkeit kann das Wellenrohr im Anschluss an den Verbindungsabschnitt auch gestuft gestaltet sein. Konkret kann das Wellenrohr im mit dem Anschlusselement verbundenen Verbindungsabschnitt einen kleineren Durchmesser haben als in einem hieran anschließenden Rohrabschnitt. Durch diese Ausgestaltung kommt, bei einem unfallbedingten Verkürzen der Wellenverbindung, die Verzahnung zwischen Anschlusselement und Wellenrohr zunehmend außer Eingriff, so dass entsprechend auch die axiale Verschiebekraft über den Verschiebeweg entsprechend abnimmt. Wenn die Außenverzahnung des Anschlusselements den Verbindungsabschnitt des Wellenrohres vollständig durchdrungen hat, das heißt in einen Rohrabschnitt mit größerem Durchmesser eintaucht, fällt die Axialkraft auf null, so dass das weitere Einschieben des Anschlusselements in das Wellenrohr im Wesentlichen kraftfrei erfolgt.

Nach einer bevorzugten Ausgestaltung ist der Außendurchmesser des Wellenrohres größer als der größte Außendurchmesser des Anschlusselements. Hiermit wird gewährleistet, dass das Anschlusselement im Crashfall gegebenenfalls vollständig in das Wellenrohr eintauchen kann, so dass die Wellenverbindung insgesamt einen großen axialen Verschiebweg realisieren kann.

Es ist vorgesehen, dass das Wellenrohr und der Anschlusszapfen beide aus einem metallischen Werkstoff hergestellt sind. Dabei kann die Festigkeit des Wellenrohres insbesondere kleiner als die Festigkeit der Außenverzahnung sein. Auf diese Weise wird sichergestellt, dass die Außenverzahnung beim Einpressen gut in das Wellenrohr eingeformt werden kann, um hier die Gegenverzahnung zu erzeugen. Nach einer möglichen Konkretisierung kann der Anschlusszapfen aus einem Stahlwerkstoff, insbesondere aus einem gehärteten Stahl, und das Wellenrohr aus einem Leichtmetall, beispielsweise Aluminium, hergestellt werden. Es versteht sich jedoch, dass die Rohrwelle auch aus einem Stahlwerkstoff hergestellt werden kann.

Das Wellenrohr kann nach einer ersten Ausführungsform eine gleichbleibende Blechdicke über der Länge aufweisen. Dabei kann das Wellenrohr beispielsweise aus einem Blech hergestellt werden, das zu einem Rohr umgeformt und entlang der Stoßkanten längsverschweißt wird. Die Länge des Wellenrohrs wird auf die jeweilige Anwendung angepasst. Die Blechdicke kann beispielsweise zwischen 1,5 mm und 2,5 mm liegen. Nach einer alternativen Ausführungsform kann das Wellenrohr auch eine variable Blechdicke über der Länge haben. Diese Ausgestaltung bietet den Vorteil, dass die Geometrie des Wellenrohres an die individuellen Belastungen angepasst werden kann. Insbesondere können ein oder beide Endabschnitte des Wellenrohres mit einer größeren Wanddicke gestaltet sein als ein dazwischenliegender Rohrabschnitt. Auf diese Weise hat der mit dem Anschlusselement zu verbindende Endabschnitt eine höhere Festigkeit, so dass eine robuste Verbindung zum Anschlusselement gegebenenfalls auch ohne Armierungsring erreicht wird.

Für alle der vorstehend genannten Ausführungsformen gilt, dass zur weiteren Erhöhung der Stabilität ein Armierungsring außen auf dem Endabschnitt des Wellenrohres angeordnet sein kann. Dieser kann insbesondere aus einem Material mit höherer Festigkeit als das Rohrmaterial bestehen.

Nach einer Ausführungsform weist die Verzahnung zwischen dem Anschlusselement und dem Wellenrohr einen mittleren Durchmesser und eine axiale Verzahnungslänge auf, wobei das Verhältnis von mittlerem Durchmesser und der axialen Verzahnungslänge vorzugsweise größer ist als 2,0, insbesondere größer ist als 2,5. Durch eine solche verhältnismäßig schmale Verzahnung, das heißt geringe Verzahnungslänge im Verhältnis zum Durchmesser, ist der Aufwand für die Herstellung der Verzahnung entsprechend gering. Außerdem ergibt sich eine kurze Bauform des Verbindungsabschnitts, was sich wiederum günstig auf das Gewicht der Wellenverbindung auswirkt. Günstig wäre in diesem Zusammenhang die Verzahnungslänge auf das für die Drehmomentübertragung nötige Maß zu begrenzen. Mit Verzahnungslänge ist insbesondere die effektive Verzahnungslänge gemeint, also die Länge der Verzahnung, die effektiv an der Drehmomentübertragung teilnimmt, das heißt die mit der Gegenverzahnung des Wellenrohres in Eingriff ist. Bei zwei voneinander axial beabstandeten Verzahnungen wäre also die Verzahnungslänge der beiden Verzahnungen zu addieren.

Die hier beschriebene Wellenverbindung kann beispielsweise Teil einer Antriebswelle sein, die zur Drehmomentübertragung von einer angetriebenen Komponente auf eine anzutreibende Komponente dient. Eine solche Antriebswelle hat entsprechend ein erstes Anschlusselement zur drehfesten Verbindung mit einer ersten Komponente im Antriebsstrang sowie am entgegengesetzten Ende ein zweites Anschlusselement zum drehfeste Verbinden mit einer zweiten Komponente im Antriebsstrang. Eines oder beide Anschlusselemente können beispielsweise als Wellenzapfen gestaltet sein. Zur drehfesten Verbindung mit einer Anschlusskomponente kann der Wellenzapfen an seinem freien Ende eine Wellenverzahnung zum Einstecken in eine entsprechende Gegenverzahnung der Anschlusskomponente aufweisen.

Die Lösung der oben genannten Aufgabe besteht weiter in einer Antriebswelle mit einer Wellenverbindung, die zumindest eine der oben genannten Ausgestaltungen hat. An ihrem dem Anschlusselement entgegengesetzten Ende hat die Antriebswelle ein zweites Anschlusselement, das fest mit dem zweiten Endabschnitt des Wellenrohrs verbunden ist. Die Verbindung mit dem zweiten Anschlusselement kann beispielsweise eine Formschlussverbindung oder eine Schweißverbindung sein. Das Anschlusselement kann beispielsweise ein Wellenzapfen oder auch ein Gelenkaußenteil eines Gleichlaufgelenks oder ein hülsenförmiges Adapterelement sein. Die Antriebswelle kann beispielsweise Teil einer mehrteiligen Gelenkwelle sein, insbesondere einer Längsantriebswelle für den Antriebsstrang eines mehrachsgetriebenen Kraftfahrzeugs.

Bevorzugte Ausführungsbeispiele werden nachstehend anhand der Zeichnungen erläutert. Hierin zeigt:
- Figur 1A: eine erfindungsgemäße Wellenverbindung in einer ersten Ausführungsform in teilweisem Längsschnitt;
- Figur 1 B: ein Detail der Wellenverbindung aus Figur 1A in vergrößerter Darstellung;
- Figur 2A: eine erfindungsgemäße Wellenverbindung in einer zweiten Ausführungsform in teilweisem Längsschnitt;
- Figur 2B: ein Detail der Wellenverbindung aus Figur 2A in vergrößerter Darstellung;
- Figur 3A: eine erfindungsgemäße Wellenverbindung in einer abgewandelten weiteren Ausführungsform im Längsschnitt;
- Figur 3B: ein Detail der Wellenverbindung aus Figur 3A in vergrößerter Darstellung;
- Figur 4: eine erfindungsgemäße Wellenverbindung in einer weiteren Ausführungsform in teilweisem Längsschnitt;
- Figur 5A: eine erfindungsgemäße Wellenverbindung in einer abgewandelten weiteren Ausführungsform im Halblängsschnitt;
- Figur 5B: ein Kraft-Weg-Diagramm der Wellenverbindung gemäß Figur 5A;
- Figur 6A: eine erfindungsgemäße Wellenverbindung in einer weiteren Ausführungsform im Halblängsschnitt;
- Figur 6B: die Wellenverbindung aus Figur 6A beim crashbedingten Ineinanderschieben in einer ersten Schiebestellung;
- Figur 6C: die Wellenverbindung aus Figur 6A beim crashbedingten Ineinanderschieben in einer weiteren Schiebestellung;
- Figur 6D: ein Kraft-Weg-Diagramm der Wellenverbindung gemäß Figur 6A;
- Figur 7A: eine erfindungsgemäße Wellenverbindung in einer weiteren Ausführungsform in teilweisem Längsschnitt;
- Figur 7B: die Wellenverbindung im Querschnitt gemäß Schnittlinie VII-VII aus Figur 7A;
- Figur 8A: eine erfindungsgemäße Wellenverbindung in einer weiteren Ausführungsform in Seitenansicht;
- Figur 8B: den Verbindungsbereich der Wellenverbindung aus Figur 8A als Detail in teilweisem Längsschnitt;
- Figur 9: eine erfindungsgemäße Wellenverbindung in einer weiteren Ausführungsform in teilweisem Längsschnitt;
- Figur 10A: eine erfindungsgemäße Wellenverbindung in einer weiteren Ausführungsform in teilweisem Längsschnitt;
- Figur 10B: den Verbindungsbereich der Wellenverbindung aus Figur 10A in vergrößerter Darstellung;
- Figur 10C: ein Kraft-Weg-Diagramm der Wellenverbindung gemäß Figur 10A;
- Figur 11: eine erfindungsgemäße Wellenverbindung in einer weiteren Ausführungsform im Längsschnitt;
- Figur 12: die erfindungsgemäße Wellenverbindung nach Figur 11 mit Anschlussrohr im Längsschnitt;
- Figur 13: die erfindungsgemäße Wellenverbindung nach Figur 11 mit Gleichlaufdrehgelenk im Längsschnitt;
- Figur 14: eine erfindungsgemäße Wellenverbindung in einer weiteren Ausführungsform im Längsschnitt;
- Figur 15: die erfindungsgemäße Wellenverbindung nach Figur 14 mit Anschlussrohr im Längsschnitt;
- Figur 16: eine erfindungsgemäße Wellenverbindung in einer weiteren Ausführungsform im Längsschnitt; und
- Figur 17: eine erfindungsgemäße Wellenanordnung mit einer erfindungsgemäßen Wellenverbindung gemäß Figur 1 im Längsschnitt.

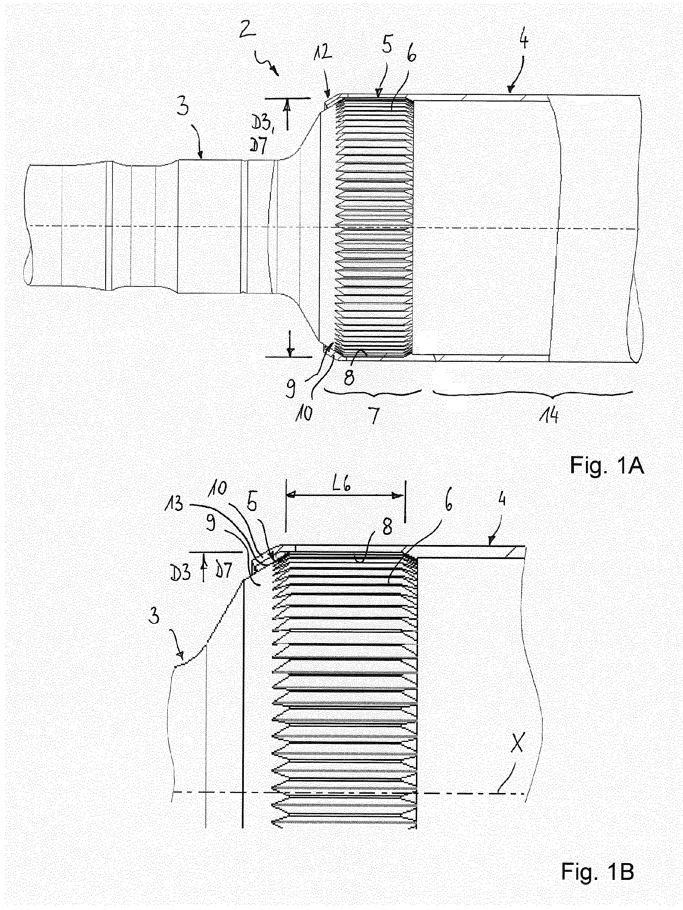

Die Figuren 1 bis 16 werden hinsichtlich ihrer Gemeinsamkeiten zunächst gemeinsam beschrieben. Es ist eine erfindungsgemäße Wellenverbindung 2 mit einem Anschlusselement 3 und einem Wellenrohr 4 gezeigt, die durch eine Pressverbindung miteinander formschlüssig verbunden sind. Die Wellenverbindung 2 kann Teil einer Antriebswelle zur Drehmomentübertragung von einem angetriebenen Teil auf ein anzutreibendes Teil sein, beispielsweise im Antriebsstrang eines Kraftfahrzeugs. Dabei dient das Anschlusselement 3 zur Drehmomentübertragung auf eine weitere drehmomentübertragende Komponente im Antriebsstrang, beispielsweise ein Gelenkinnenteil oder ein Gelenkaußenteil eines Drehgelenks.

Konkret ist vorgesehen, dass das Anschlusselement 3 einen Verbindungsabschnitt 5 mit einer Außenverzahnung 6 aufweist, die mit Übermaßpassung (Presspassung) in den Endabschnitt 7 des Wellenrohrs 4 eingepresst ist. Auf diese Weise wird zwischen dem Wellenrohr 4 und dem Anschlusselement 3 eine in Umfangsrichtung wirksame formschlüssige Verbindung zur Drehmomentübertragung gebildet. Das Wellenrohr 4 hat vor dem Einpressen des Flanschabschnitts 7 eine glatte, das heißt verzahnungslose Oberfläche. Die Verzahnung wird an der Innenwandung des Wellenrohrs 4 erst durch das Einpressen des Anschlusselements 3 erzeugt.

Das Wellenrohr 4 und das Anschlusselement 3 sind jeweils aus einem metallischen Werkstoff hergestellt. Dabei können derselbe oder unterschiedliche Werkstoffe verwendet werden. Nach einer beispielhaften Ausführungsform kann das Anschlusselement 3 aus einem Stahlwerkstoff, insbesondere aus einem härtbaren Stahl, und das Wellenrohr 4 aus einem Leichtmetall, beispielsweise Aluminium, hergestellt werden. Durch eine solche Werkstoffkombination, das heißt bei geringerer Festigkeit des Wellenrohres als der Außenverzahnung, kann die Außenverzahnung 6 beim Einpressen gut in das Wellenrohr 4 eingeformt werden, um hier die Gegenverzahnung 8 zu erzeugen.

Das Anschlusselement 3 hat im Bereich der Außenverzahnung 6 einen größten Au-βendurchmesser D3 und einen gegenüber der Außenverzahnung 6 reduzierten Teilbereich 9 mit einem kleineren Durchmesser. Das Wellenrohr 4 hat einen Axialverbindungsabschnitt 10, der in den reduzierten Teilbereich 9 des Flanschabschnitts 7 nach radial innen eingeformt und gegen eine Stützfläche 13 des Anschlusselements 3 axial abgestützt ist. Auf diese Weise ist zwischen dem Wellenrohr 4 und dem Anschlusselement 3 eine in axialer Richtung wirksame formschlüssige Axialverbindung zur Übertragung von Axialkräften gebildet. Das Einformen des Wellenrohres 4 in den reduzierten Abschnitt 9 des Anschlusselements 3 kann beispielsweise durch Ein- oder Umbördein des Axialverbindungsabschnitts 10 nach radial innen erfolgen. Dabei kann die axiale Haltekraft der formschlüssigen Axialverbindung entsprechend den technischen Anforderungen an die Wellenverbindung ausgelegt werden. Beispielsweise kann die Wellenverbindung so ausgelegt werden, dass Axialkräfte bis zu einem bestimmten Wert aufgenommen werden können, ohne dass die Wellenverbindung beziehungsweise die Antriebswelle beschädigt wird. Erst bei Überschreiten der axialen Haltekraft dringt das Anschlusselement 3 dann in das Wellenrohr 4 ein, wobei sich die Wellenverbindung 2 verkürzt.

Das Wellenrohr 4 kann eine gleichbleibende Blechdicke über der Länge aufweisen, wie in den Figuren 1 bis 16 gezeigt. Die Blechdicke kann beispielsweise zwischen 1,5 mm und 2,5 mm liegen. Die Länge des Wellenrohrs wird auf die jeweilige Anwendung angepasst.

Die Wellenverbindung 2 hat durch die Ausgestaltung mit eingeformtem Axialverbindungsabschnitt 10 besonders gute Crasheigenschaften. Insgesamt kann die Wellenverbindung 2 relativ hohe Axialkräfte schadensfrei aufnehmen, wobei hinsichtlich der übertragbaren Kräfte zumindest teilweise eine funktionale Trennung zwischen den in Umfangsrichtung und den in Axialrichtung wirksamen Kräften gegeben ist. Die Verzahnungsbereich 6, 8 dient dabei im Wesentlichen zur Drehmomentübertragung, das heißt bewirkt eine formschlüssige Verbindung in Umfangsrichtung, während der Haltebereich 9, 10 im Wesentlichen eine formschlüssige Axialverbindung bildet.

Nachstehend werden die Besonderheiten der einzelnen Ausführungsbeispiele anhand der Figuren 1 bis 16 näher erläutert.

Bei der Wellenanordnung 2 gemäß den Figuren 1A und 1B ist der Axialverbindungsabschnitt 10 des Wellenrohres 4 durch ein nach radial innen umgebördeltes Rohrende 12 gebildet. Der Axialverbindungsabschnitt 10 ist gegen den im Durchmesser reduzierten Abschnitt 9 des Anschlusselements 3 abgestützt, der vorliegend durch eine konische Stützfläche gebildet ist, die sich an die Verzahnung 6 axial anschließt. Bei Auftreten von axialen Zugkräften auf die Wellenanordnung, beispielsweise infolge eines kleineren Aufpralls des Kraftfahrzeugs mit nach vorne schwingender Motor-Getriebe-Einheit, kann der nach innen eingeformte Endabschnitt 12 im Zusammenspiel mit der Stützfläche 9 gewisse Axialkräfte zerstörungsfrei aufnehmen.

Es ist erkennbar, dass das Wellenrohr 4 in einem an den Verbindungsabschnitt 7 anschließenden Rohrabschnitt 14 einen im Wesentlichen konstanten Durchmesser aufweist. Der Rohrabschnitt 14 mit gleichem Durchmesser kann sich beispielsweise über eine Länge von mindestens dem einfachen oder mehrfachen Durchmesser des Verbindungsabschnitts 7, gegebenenfalls über die ganze Länge des Wellenrohres 4, erstrecken. Das mit dem Wellenrohr 4 verbundene Anschlusselement 3 ist vorliegend als Wellenzapfen gestaltet, der am zum Verbindungsabschnitt 5 entgegengesetzten Ende eine Wellenverzahnung 11 zum Verbinden mit einer weiteren Antriebskomponente aufweist.

Bei auftretenden axialen Druckkräften, beispielsweise infolge eines stärkeren Aufpralls des Kraftfahrzeugs mit sich verkürzendem Abstand zwischen Motor und Hinterachsdifferential, wird das Anschlusselement 3 mit seiner Außenverzahnung 6 weiter in das Wellenrohr 4 eingeschoben, so dass in dem Wellenrohr 4 eine entsprechende Innenverzahnung unter Aufnahme von Formänderungsenergie erzeugt beziehungsweise eingeformt wird.

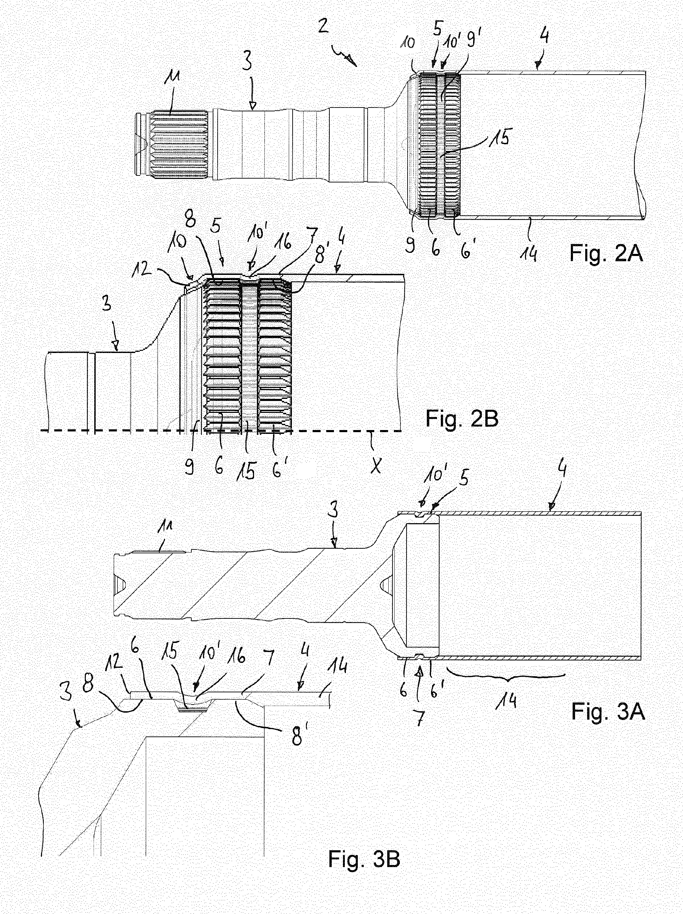

Die Wellenanordnung 2 gemäß Figur 2A und 2B entspricht weitgehend der Ausführungsform gemäß Figur 1, so dass hinsichtlich der Gemeinsamkeiten auf obige Beschreibung Bezug genommen wird. Gleiche beziehungsweise abgewandelte Einzelheiten sind dabei mit denselben Bezugszeichen versehen wie in Figur 1. Der einzige Unterschied der vorliegenden Ausführungsform nach Figur 2 ist, dass zwei axial benachbarte Verzahnungsbereiche vorgesehen sind. Hierfür hat das Anschlusselement 3 zwei Verzahnungsabschnitte 6, 6', zwischen denen eine umlaufende Ringnut 15 gebildet ist. Das Wellenrohr 4 hat einen nach innen umgebördelten Endabschnitt 12, welcher einen ersten Axialsicherungsabschnitt 10 bildet, und einen in die Ringnut 15 eingeformten Rohrabschnitt 16, welcher einen zweiten Axialsicherungsabschnitt 10' bildet. Diese Ausführungsform mit zwei nach radial innen geformten Abschnitten 12, 16 ist hinsichtlich der Aufnahme von Axialkräften besonders robust. Insbesondere können Axialkräfte in beide Richtungen, das heißt aufeinander zu und voneinander weg bis zu einem definierten Maß aufgenommen werden.

Die Wellenanordnung 2 gemäß Figur 3A und 3B entspricht in weiten Teilen der Ausführungsform gemäß Figur 2A und 2B, so dass hinsichtlich der Gemeinsamkeiten auf obige Beschreibung Bezug genommen wird. Gleiche beziehungsweise abgewandelte Einzelheiten sind dabei mit denselben Bezugszeichen versehen wie in den Figuren 1 und 2. Der einzige Unterschied der vorliegenden Ausführungsform nach Figur 3 gegenüber derjenigen gemäß Figur 2 ist, dass das Rohrende 12 des Wellenrohrs 4 im Bereich der Verzahnung 6 angeordnet ist, das heißt keinen umgebördelten Endabschnitt aufweist. Im Übrigen entspricht die Wellenverbindung nach Figur 3 der obigen Wellenverbindung, auf deren Beschreibung hiermit abkürzend Bezug genommen wird.

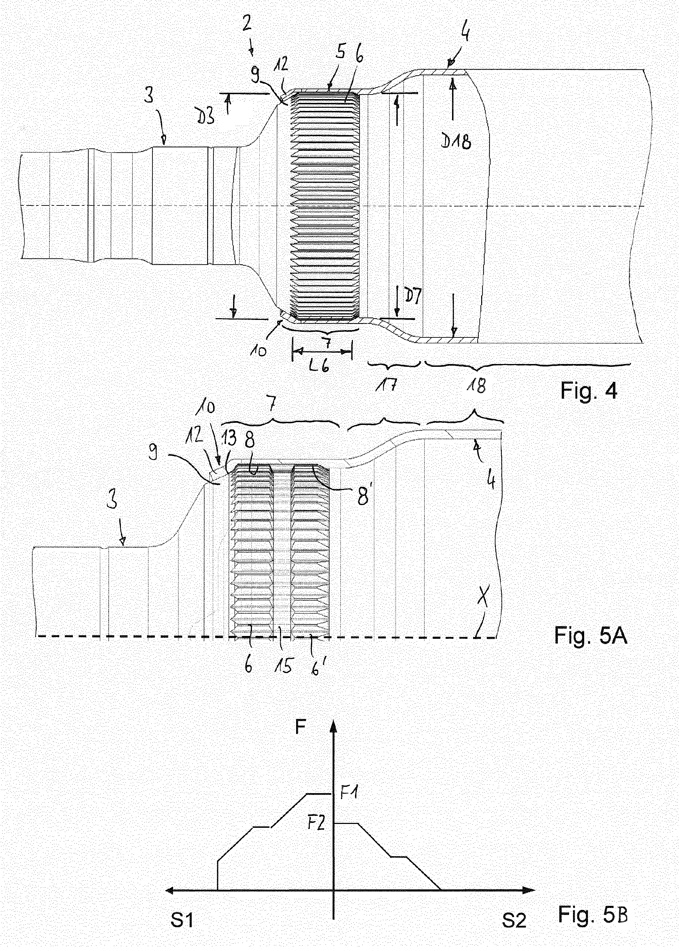

Die Wellenanordnung 2 gemäß Figur 4 entspricht weitestgehend der Ausführungsform gemäß Figur 1, so dass hinsichtlich der Gemeinsamkeiten auf obige Beschreibung Bezug genommen wird. Gleiche beziehungsweise abgewandelte Einzelheiten sind dabei mit denselben Bezugszeichen versehen wie in Figur 1. Der einzige Unterschied der vorliegenden Ausführungsform nach Figur 4 besteht darin, dass das Wellenrohr 4 im Anschluss an den Verbindungsabschnitt 7 einen Übergangsabschnitt 17 mit einem sich über der Länge erweiterndem Durchmesser aufweist, sowie einen sich an den Übergangsabschnitt 17 anschließenden Rohrabschnitt 18 mit gleichbleibendem Durchmesser. Der Innendurchmesser D18 des Rohrabschnitts 18 ist größer als der Außendurchmesser D3 des Anschlusselements 3 beziehungsweise der Verzahnung 6, insbesondere größer als das 1,1-fache des Außendurchmessers D3. Bei der vorliegenden Ausgestaltung mit gestuftem Wellenrohr 4 schiebt sich bei einem unfallbedingten Verkürzen der Wellenverbindung 2 das Anschlusselement 3 zunächst durch den Verbindungsabschnitt 7 hindurch, zunehmend weiter in den Übergangsbereich 17. Beim Eintauchen in den Übergangsabschnitt 17 kommt die Außenverzahnung 6 des Anschlusselements 3 zunehmend außer Eingriff von der Innenverzahnung 8 des Wellenrohres 4. Entsprechend nimmt beim axialen Verkürzen der Wellenverbindung 2 auch die axiale Verschiebkraft über dem Verschiebeweg ab. Wenn die Außenverzahnung 6 des Anschlusselements 3 den Verbindungsabschnitt 7 vollständig durchdrungen hat, das heißt vollständig in den Übergangsabschnitt 17 beziehungsweise Rohrabschnitt 18 mit größerem Durchmesser eintaucht, fällt die Axialkraft auf null, so dass das weitere Einschieben des Anschlusselements 3 in das Wellenrohr 4 im Wesentlichen kraftfrei erfolgt.

Die Wellenanordnung 2 gemäß Figur 5A ist im Wesentlichen eine Kombination der Ausführungsform gemäß Figur 4 und derjenigen gemäß Figur 2, auf deren Beschreibung insofern Bezug genommen wird. Gleiche beziehungsweise abgewandelte Einzelheiten sind dabei mit denselben Bezugszeichen versehen wie in den genannten Figuren. Der Endabschnitt 12 des Wellenrohres 4 ist nach radial innen umgeformt und stützt sich gegen die Stützfläche 13 des Anschlusselements 3 ab. Das Wellenrohr 4 ist als gestuftes Rohr ausgeführt mit einem Verbindungsabschnitt 7 kleineren Durchmessers und einem Rohrabschnitt 18 mit größerem Durchmesser D18. Das Wellenrohr 4 hat im axialen Überdeckungsbereich mit der Ringnut 15 einen gleichbleibenden Durchmesser. Es versteht sich jedoch, dass das Wellenrohr 4 im axialen Überdeckungsbereich mit der Ringnut auch nach radial innen eingeformt sein kann, so dass eine formschlüssige Axialsicherung gegeben ist. In diesem Fall sind die axialen Verbindungsmittel in beide axiale Richtungen mit größerer Kraft wirksam.

Figur 5B zeigt ein Kraft-Weg-Diagramm der Wellenverbindung 2 gemäß Figur 5A, und zwar bei einer Verlängerung S1 der Wellenverbindung aufgrund von zwischen dem Anschlusselement 3 und dem Wellenrohr 4 wirkenden axialen Zugkräften, sowie bei einer Verkürzung S2 der Wellenverbindung aufgrund von zwischen dem Anschlusselement 3 und dem Wellenrohr 4 wirkenden axialen Druckkräften.

Im Falle, dass die axiale Haltekraft F1 der Wellenverbindung in Zugrichtung S1 überschritten wird, beispielsweise infolge eines Unfalls mit nach vorne schwingender Motor-Getriebeeinheit, kann das Anschlusselement 3 über einen begrenzten Weg aus dem Wellenrohr 4 herausgezogen werden. Bis zum Erreichen der Haltekraft F1, die auch als Aktivierungskraft bezeichnet werden kann, hält die Wellenverbindung 2 Axialkräften zerstörungsfrei stand. Wird die Haltekraft F1 jedoch überschritten, wird der Verzahnungsabschnitt 5 des Anschlusselements 3 aus dem Verbindungsabschnitt 7 des Wellenrohres 4 herausgezogen, wobei der umgebördelte Axialsicherungsabschnitt 10 aufgeweitet wird. Beim Austreten der ersten Verzahnung 6 aus dem Rohrende 12 sinkt die Axialhaltekraft zunehmend, im Bereich der Nut 15 bleibt die Axialkraft gleich und fällt mit dem Austreten der zweiten Verzahnung 6' aus dem Rohrende 12 weiter ab, bis der Verzahnungsabschnitt 5 des Anschlusselements 3 vollständig aus dem Wellenrohr 4 herausgezogen ist.

Im umgekehrten Belastungsfall, das heißt Auftreten von Axialkräften in Druckrichtung S2, kann die Wellenverbindung 2 entsprechenden Haltekräften F2 standhalten, die größer sind als die Haltekraft F1. Dies hängt damit zusammen, dass beim Einfahren weniger Formänderungsarbeit aufgenommen wird als beim oben beschriebenen Herausziehen, bei dem der Axialsicherungsabschnitt 10 entsprechend zu überwinden ist. Wenn die zwischen Anschlusselement 3 und Wellenrohr 4 aufeinander zu wirksame unfallbedingte Axialkraft die Haltekraft F2 übersteigt, beispielsweise infolge eines Unfalls mit gestauchter Karosserie, bewegen sich das Anschlusselement 3 und das Wellenrohr 4 teleskopartig ineinander. Dabei wird das Anschlusselement 3 mit seiner Au-βenverzahnung 6 weiter in das Wellenrohr 4 eingeschoben, so dass in dem Rohrabschnitt mit gleichbleibendem Durchmesser eine entsprechende Innenverzahnung unter Aufnahme von Formänderungsenergie erzeugt beziehungsweise eingeformt wird. Beim Einfahren der wellenseitigen Verzahnung 6' in den erweiterten Rohrabschnitt 17 sinkt die Verzahnungskraft zunehmend, im Bereich der Nut 15 bleibt die Kraft gleich und fällt mit dem Eintreten der zapfenseitigen Verzahnung 6 in den Rohrabschnitt 17 weiter ab, bis der Verzahnungsabschnitt 5 des Anschlusselements 3 vollständig in den erweiterten Rohrabschnitt 17 eingefahren ist.

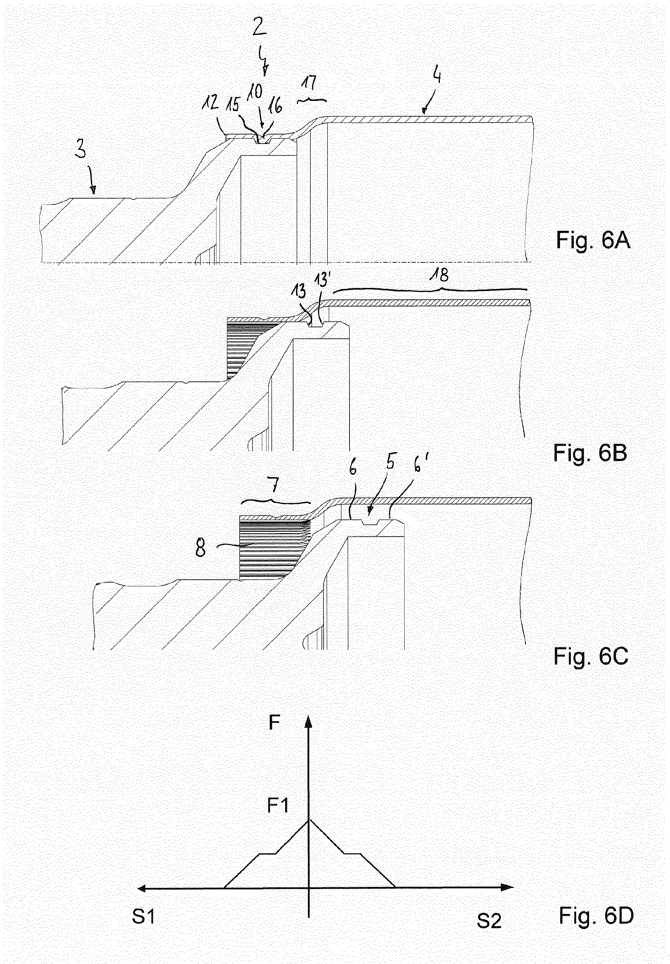

Die Figuren 6A bis 6D werden nachstehend gemeinsam beschrieben. Es ist eine Wellenanordnung 2 in einer weiteren Ausführungsform in verschiedenen Zuständen (Figuren 6A-6C) und ein entsprechendes Kraft-Weg-Diagramm gezeigt (Figur 6D). Diese vorliegende Ausführungsform entspricht weitestgehend derjenigen gemäß Figur 3, auf deren Beschreibung insofern abkürzend verwiesen wird. Dabei sind gleiche beziehungsweise abgewandelte Einzelheiten mit gleichen Bezugszeichen versehen wie in Figur 3 beziehungsweise den übrigen Figuren. Der einzige Unterschied der vorliegenden Ausführungsform nach Figur 6 gegenüber derjenigen gemäß Figur 3 besteht darin, dass ein gestuftes Wellenrohr 4 verwendet wird, wie es beispielsweise in Figur 4 gezeigt ist, auf deren Beschreibung hier abkürzend verwiesen wird. Das Rohrende 12 des Wellenrohrs 4 ist im Bereich der Verzahnung 6 angeordnet, das heißt es hat endseitig keine Umbördelung. Die Axialsicherung 10' ist durch Einformen des Rohrabschnitts 16 in die Ringnut 15 gebildet.

Bei der vorliegenden Ausführungsform ist der Kraft-Weg-Verlauf beim Ineinander- beziehungsweise Auseinanderfahren symmetrisch. Die Haltekraft F1 ist im Wesentlichen durch den Formschlusseingriff des Rohrabschnitts 16 in die Ringnut 15 gebildet. Nach Überwinden der Haltekraft bewegen sich das Anschlusselement 3 und das Wellenrohr 4 teleskopartig ineinander beziehungsweise auseinander. Dabei wird das Anschlusselement 3 mit seiner Außenverzahnung 6 aus dem Verbindungsabschnitt 7 des Wellenrohrs 4 eingeschoben, respektive herausgezogen, wobei die Haltekraft über dem Verschiebeweg entsprechend abnimmt, im Bereich der Nut 15 gleichbleibt und im anderen Verzahnungsbereich dann weiter abfällt, bis der Verzahnungsabschnitt 5 des Anschlusselements 3 vollständig aus dem Verbindungsabschnitt 7 des Wellenrohres 4 bewegt ist.

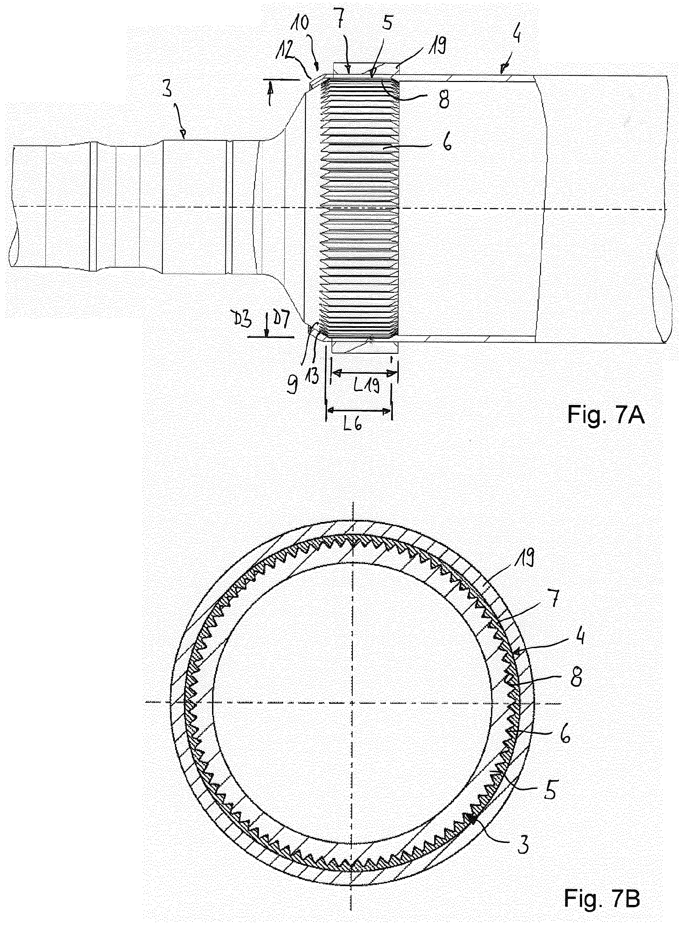

Die Figuren 7A und 7B zeigen eine Wellenanordnung 2 in einer weiteren Ausführungsform. Diese entspricht weitestgehend derjenigen gemäß Figur 1, auf deren Beschreibung insofern abkürzend verwiesen wird. Dabei sind gleiche beziehungsweise abgewandelte Einzelheiten mit gleichen Bezugszeichen versehen wie in Figur 1. Der einzige Unterschied der vorliegenden Ausführungsform nach Figur 7 besteht darin, dass die Wellenverbindung 2 einen Verstärkungsring 19 aufweist, der auf das Wellenrohr 4 aufgeschoben und im Überdeckungsbereich mit der Verbindung angeordnet ist. Dabei beträgt die axiale Länge L19 des Verstärkungsrings 19 etwa der axialen Länge der Verzahnung 6 des Anschlusselements 3 und liegt insbesondere zwischen dem 0,8-fachen und 1,2-fachen der Verzahnungslänge. Der Verstärkungsring 19 wird vorzugsweise vor dem Einpressen des Anschlusselements 3 auf den Verbindungsbereich des Wellenrohrs 4 aufgeschoben. Durch den Verstärkungsring 19, der auch als Armierungsring bezeichnet werden kann, wird eine besonders robuste Verbindung zwischen Anschlusselement 3 und Wellenrohr 4 erreicht, so dass besonders hohe Kräfte und Momente übertragen werden können. Der Endabschnitt 12 des Wellenrohres 4 ist nach innen umgebördelt, so dass eine zusätzliche Sicherung gegen axiale Zugkräfte zwischen Anschlusselement 3 und Wellenrohr 4 gegeben ist.

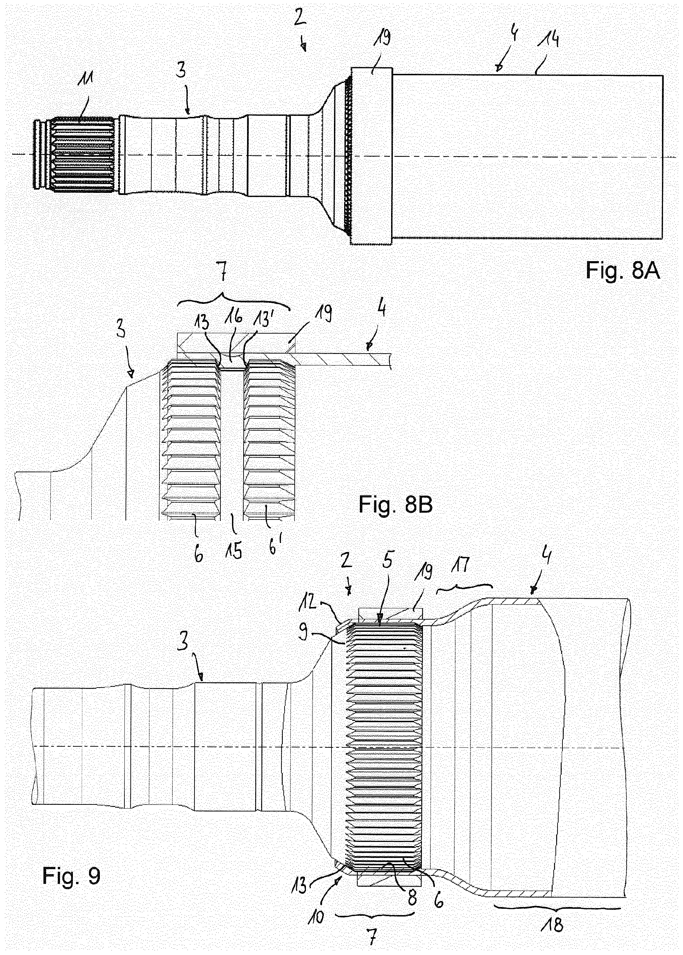

Die Wellenanordnung 2 gemäß den Figuren 8A und 8B ist im Wesentlichen eine Kombination der Ausführungsform gemäß den Figuren 3 mit der Ausführungsform gemäß Figur 7. Insofern wird bezüglich der entsprechenden Gemeinsamkeiten abkürzend auf obige Beschreibung verwiesen. Dabei sind gleiche beziehungsweise abgewandelte Einzelheiten mit den gleichen Bezugszeichen versehen wie in den genannten Figuren. Es ist erkennbar, dass das axiale Ende 12 des Wellenrohrs 4 im Bereich der Verzahnung 6 angeordnet ist, das heißt das Wellenrohr 4 hat keinen umgebördelten Endabschnitt. Das Anschlusselement 3 hat zwei Verzahnungsabschnitte 6, 6', zwischen denen eine umlaufende Ringnut 15 gebildet ist. Das Wellenrohr 4 hat im axialen Überdeckungsbereich mit der Ringnut 15 einen nach innen eingeformten Rohrabschnitt 16, so dass eine formschlüssige Axialsicherung 10 gegeben ist. Ferner ist ein Verstärkungsring 19 vorgesehen, der im axialen Überdeckungsbereich der Verzahnungsverbindung angeordnet ist. Das Wellenrohr 4 hat einen gleichbleibenden Durchmesser, zumindest im Verbindungsabschnitt 7 und daran axial anschließenden Rohrabschnitt 14.

Die Figur 9 zeigt eine Wellenanordnung 2 in einer weiteren Ausführungsform. Diese entspricht einer Kombination der Ausführung gemäß Figur 4 und derjenigen gemäß Figur 7, auf deren Beschreibung insofern abkürzend verwiesen wird. Dabei sind gleiche beziehungsweise abgewandelte Einzelheiten mit gleichen Bezugszeichen versehen wie in den genannten Figuren. Die vorliegende Wellenverbindung 2 ist gestaltet wie diejenige nach Figur 4 und hat zusätzlich einen Verstärkungsring 19, wie in Figur 7 gezeigt, der auf das Wellenrohr 4 aufgeschoben und im Überdeckungsbereich mit dem Verbindungsabschnitt 7 angeordnet ist.

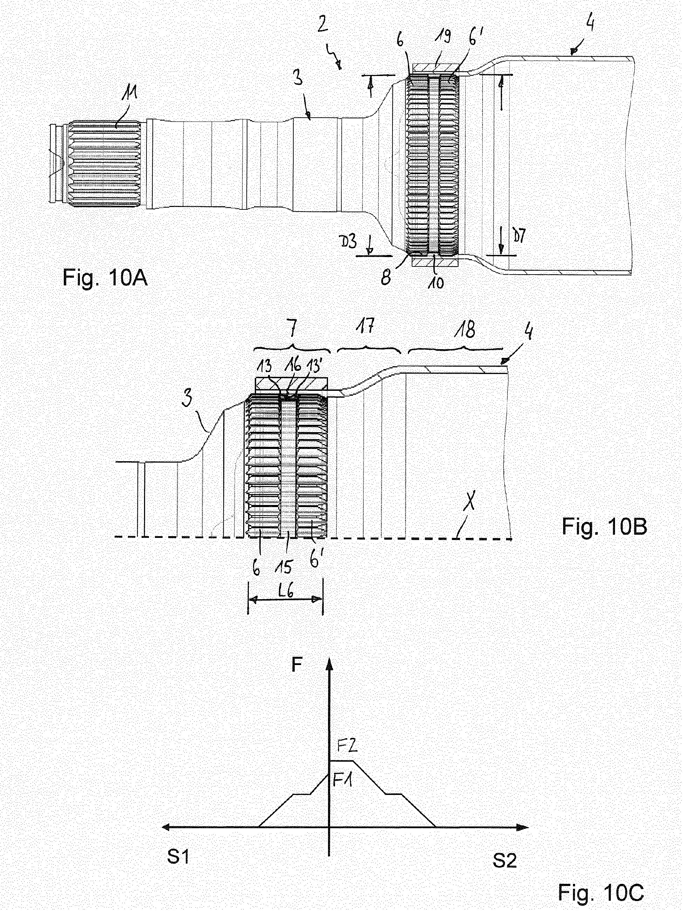

Die Figuren 10A bis 10C werden nachstehend gemeinsam beschrieben. Es ist eine Wellenanordnung 2 in einer weiteren Ausführungsform (Figuren 10A, 10B) und ein entsprechendes Kraft-Weg-Diagramm (Figur 10C) gezeigt. Die Wellenanordnung 2 gemäß Figur 10 ist im Wesentlichen eine Kombination der Ausführungsform gemäß Figur 6 mit der Ausführungsform gemäß Figur 7, auf deren Beschreibung insofern abkürzend verwiesen wird. Dabei sind gleiche beziehungsweise abgewandelte Einzelheiten mit den gleichen Bezugszeichen versehen wie in den genannten Figuren. Die vorliegende Wellenverbindung 2 ist gestaltet wie diejenige nach Figur 6 und hat zusätzlich einen Verstärkungsring 19, wie in Figur 7 gezeigt, der auf das Wellenrohr 4 aufgeschoben und im Überdeckungsbereich mit dem Verbindungsabschnitt 7 angeordnet ist. Vor dem Aufziehen des Verstärkungsrings 19 wird der Ringabschnitt 16 des Wellenrohrs 4 in die Nut 15 des Anschlusselements 3 eingeformt, so dass eine formschlüssige Axialverbindung gegeben ist.

Das Kraft-Weg-Diagramm für die Wellenverbindung 2 nach Figur 10C ist gegenüber dem für die Ausführungsform nach Figur 6 insofern abgewandelt, als dass die Haltekraft F1 bei axialen Zugkräften geringer ist als die Haltekraft F2 bei auftretenden Drucckräften. Die Begründung hierfür ist, dass beim Ineinanderfahren durch die in das Wellenrohr 4 einzuformende Verzahnung eine höhere Formänderungsenergie aufzubringen ist.

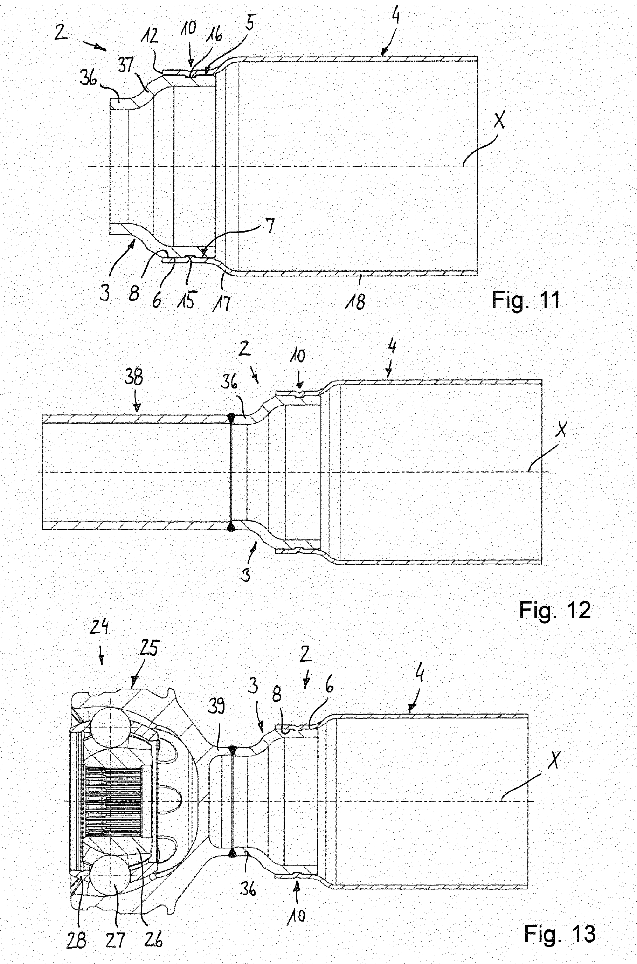

Die Figur 11 zeigt eine Wellenanordnung 2 in einer weiteren Ausführungsform. Diese entspricht weitestgehend der Ausführung gemäß Figur 6, auf deren Beschreibung insofern abkürzend verwiesen wird. Dabei sind gleiche beziehungsweise abgewandelte Einzelheiten mit gleichen Bezugszeichen versehen wie in den obigen Figuren. Die vorliegende Wellenverbindung 2 ist dadurch gekennzeichnet, dass das Anschlusselement 3 als Adapterelement gestaltet ist. Es ist erkennbar, dass das Adapterelement eine größere Wanddicke aufweist als das Wellenrohr 4. Der Verbindungsabschnitt 5, der außenverzahnt ist wie bei der Ausführungsform nach Figur 6, hat einen größeren Durchmesser als ein entgegengesetzter Endabschnitt 36 des Adapterelements 3. Zwischen dem Endabschnitt 36 und dem Verbindungsabschnitt 5 ist ein Zwischenabschnitt 37 mit variablem Durchmesser über der Länge gebildet. Im Übrigen entspricht die vorliegende Ausführungsform derjenigen nach Figur 6, auf deren Beschreibung insofern Bezug genommen wird.

In Figur 12 ist die Wellenanordnung 2 aus Figur 11 mit einem angeschweißten Wellenrohr 38 gezeigt. Das Wellenrohr 38 hat einen kleineren Durchmesser und eine größere Wanddicke als das Wellenrohr 4. Dabei entsprechen der Durchmesser und die Wanddicke zumindest etwa derjenigen des Adapterelements 3.

In Figur 13 ist die Wellenanordnung 2 aus Figur 11 mit einem hiermit verbundenen Gleichlaufgelenk 24 gezeigt. Konkret ist das Adapterelement 3 an das Gelenkaußenteil 25 des Gleichlaufgelenks 24 angeschweißt, das einen entsprechenden angeformten Hülsenansatz 39 aufweist. Das Gleichlaufgelenk 24 umfasst ferner ein Gelenkinnenteil 26, jeweils in einem Paar von einander gegenüberliegenden äußeren Kugelbahnen und inneren Kugelbahnen geführte drehmomentübertragende Kugeln 27 sowie einen die Kugeln in einer Ebene haltenden Kugelkäfig 28.

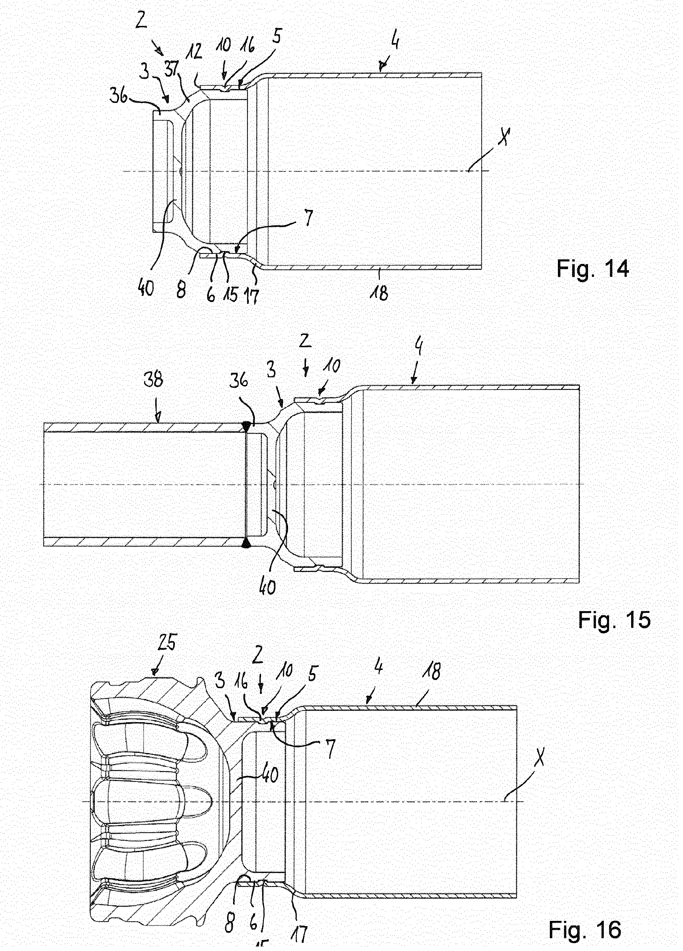

In Figur 14 ist eine Wellenanordnung 2 in einer weiteren Ausführungsform gezeigt. Diese entspricht weitestgehend der Ausführungsform gemäß Figur 11, auf deren Beschreibung insofern abkürzend verwiesen wird. Dabei sind gleiche beziehungsweise abgewandelte Einzelheiten mit gleichen Bezugszeichen versehen wie in den obigen Figuren. Die vorliegende Wellenverbindung 2 ist dadurch gekennzeichnet, dass das Anschlusselement 3 als Adapterelement mit geschlossenem Boden 40 gestaltet ist, der zwischen dem Endabschnitt 36 und dem Verbindungsabschnitt 5 liegt.

In Figur 15 ist die Wellenanordnung 2 aus Figur 14 mit einem angeschweißten Wellenrohr 38 gezeigt. Das Wellenrohr 38 hat einen kleineren Durchmesser und eine größere Wanddicke als das Wellenrohr 4. Dabei entsprechen der Durchmesser und die Wanddicke zumindest etwa derjenigen des Adapterelements 3.

Die Figur 16 zeigt eine Wellenanordnung 2 in einer weiteren Ausführungsform. Diese entspricht in weiten Teilen der Ausführung gemäß Figur 6, respektive Figur 13, auf deren Beschreibung insofern abkürzend verwiesen wird. Dabei sind gleiche beziehungsweise abgewandelte Einzelheiten mit gleichen Bezugszeichen versehen wie in den obigen Figuren. Die vorliegende Wellenverbindung 2 ist dadurch gekennzeichnet, dass das Anschlusselement 3 ein einteilig angeformter Anschlusszapfen eines Gelenkaußenteils 25. Das Gelenkaußenteil 25 hat einen Boden 40, von dem aus sich der Anschlusszapfen als Hohlzapfen axial erstreckt.

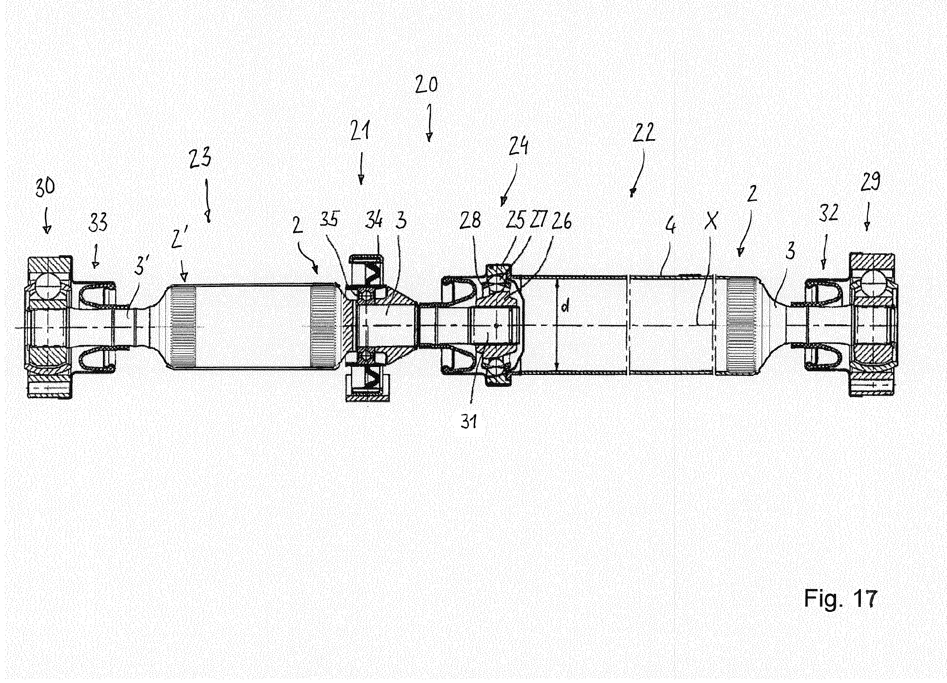

In Figur 17 ist eine Antriebswelle 20 mit einem Zwischenlager 21, wie sie beispielsweise im Antriebsstrang eines Kraftfahrzeuges zur Übertragung eines Drehmoments vom Schaltgetriebe auf das Achsdifferential verwendet wird, in gestreckter Lage zur Längsachse X dargestellt. Die Antriebswelle 20 ist mehrteilig aufgebaut und umfasst einen ersten Wellenabschnitt 22 und einen zweiten Wellenabschnitt 23, welche mittels eines Drehgelenks 24 miteinander verbunden sind. Das Drehgelenk 24 ist in Form eines Gleichlaufgelenks gestaltet und weist ein Gelenkaußenteil 25 mit äußeren Kugelbahnen, ein Gelenkinnenteil 26 mit inneren Kugelbahnen, jeweils in einem Paar der einander gegenüberliegenden äußeren Kugelbahnen und inneren Kugelbahnen geführte drehmomentübertragende Kugeln 27 sowie einen die Kugeln in der winkelhalbierenden Ebene haltenden Kugelkäfig 28.

Der erste Wellenabschnitt 22 umfasst eine Wellenverbindung 2 gemäß Figur 1, deren Wellenrohr 4 mit dem Gelenkaußenteil 6 des Gleichlaufgelenks 24 verbunden ist und deren Wellenzapfen 3 mit dem Gelenkinnenteil eines endseitigen Gleichlaufdrehgelenks 29 verbunden ist. Der zweite Wellenabschnitt 23 umfasst zwei Wellenverbindungen 2, 2' gemäß Figur 1, wobei das Wellenrohr 4 beidseitig mit einem entsprechenden Wellenzapfen 3, 3' verbunden ist. Dabei ist der Verbindungsabschnitt 31 des mittigen Wellenzapfens 3 mit dem Gelenkinnenteil 26 des mittleren Gleichlaufgelenks 24 drehfest verbunden, während der endseitige Wellenzapfen 3' mit dem Gelenkinnenteil eines endseitigen Gleichlaufdrehgelenks 30 verbunden ist.

Die endseitigen Gleichlaufgelenke 29, 30 sind in Form von Verschiebegelenken gestaltet, die zum Anschluss an ein nicht dargestelltes Schaltgetriebe beziehungsweise an ein nicht dargestelltes Achsdifferential des Kraftfahrzeuges dienen. Die Verschiebegelenke sind mittels Dichtungsanordnungen 32, 33 gegenüber der Umgebung abgedichtet.

Axial benachbart zum mittleren Gleichlaufgelenk 24 ist das Zwischenlager 21 mit Dämpfungskörper 34 angeordnet, in dem die Antriebswelle 20 an die Fahrzeugkarosserie angeschlossen wird. Die Antriebswelle 20 ist mittels eines Wälzlagers 35, das auf einem Lagerabschnitt des mittleren Wellenzapfens 3 aufgezogen ist, drehbar gelagert.

### Bezugszeichenliste

- 2: Wellenverbindung
- 3: Anschlusselement
- 4: Wellenrohr
- 5: Flanschabschnitt
- 6: Außenverzahnung
- 7: Flanschabschnitt
- 8: Gegenverzahnung
- 9: Teilbereich
- 10: Axialverbindungsabschnitt
- 11: Wellenverzahnung
- 12: Endabschnitt
- 13: Stützfläche
- 14: Endbereich
- 15: Ringnut
- 16: Rohrabschnitt
- 17: Übergangsbereich
- 18: Rohrbereich
- 19: Verstärkungsring
- 20: Antriebswelle
- 21: Zwischenlager
- 22: erster Wellenabschnitt
- 23: zweite Wellenabschnitt
- 24: Gleichlaufgelenk
- 25: Gelenkaußenteil
- 26: Gelenkinnenteil
- 27: Kugeln
- 28: Kugelkäfig
- 29: Gleichlaufgelenk
- 30: Gleichlaufgelenk
- 31: Verbindungsabschnitt
- 32: Dichtungsanordnung
- 33: Dichtungsanordnung
- 34: Dämpfungskörper
- 35: Wälzlager
- 36: Endabschnitt
- 37: Zwischenabschnitt
- 38: Wellenrohr
- 39: Hülsenansatz
- 40: Boden

- D: Durchmesser
- F: Kraft
- L: Länge
- S: Weg
- X: Längsachse

## Patentansprüche

1. Wellenverbindung, insbesondere für einen Antriebsstrang eines Kraftfahrzeugs, umfassend:
ein Wellenrohr (4) aus einem Metallwerkstoff,
ein Anschlusselement (3) aus einem Metallwerkstoff, wobei ein Verbindungsabschnitt (5) des Anschlusselements (3) mit einem Verbindungsabschnitt (7) des Wellenrohrs (4) verbunden ist,
wobei das Wellenrohr (4) einen Axialverbindungsbereich (10,10') aufweist, der in einen Teilbereich (9, 9') des Verbindungsabschnitts (5) des Anschlusselements (3) nach radial innen eingeformt ist, so dass zwischen dem Wellenrohr (4) und dem Anschlusselement (3) eine in axialer Richtung wirksame formschlüssige Axialverbindung zur Übertragung von Axialkräften gebildet ist,
**dadurch gekennzeichnet,**
**dass** der Verbindungsabschnitt (5) des Anschlusselements (3) eine Außenverzahnung (6) aufweist, die mit Presspassung in den Verbindungsabschnitt (7) des Wellenrohrs (4) eingepresst ist, wobei zwischen dem Wellenrohr (4) und dem Anschlusselement (3) eine in Umfangsrichtung wirksame formschlüssige Verbindung zur Drehmomentübertragung gebildet ist,
wobei das Anschlusselement (3) einen größten Außendurchmesser (D3) im Bereich der Außenverzahnung (6) aufweist, und
wobei die formschlüssige Axialverbindung derart gestaltet ist, dass diese Axialkräfte von bis zu 5 kN schadensfrei aufnehmen kann.

2. Wellenverbindung nach Anspruch 1,
**dadurch gekennzeichnet, dass** die formschlüssige Axialverbindung in beide axiale Richtungen (S1, S2) wirksam ist.

3. Wellenverbindung nach einem der Ansprüche 1 oder 2,
**dadurch gekennzeichnet, dass** der Verbindungsabschnitt (5) zwei axial benachbarte Außenverzahnungen (6, 6') aufweist, zwischen denen eine umlaufende Ringnut (15) gebildet ist, in die der Axialverbindungsabschnitt (10, 10') des Wellenrohres (4) eingeformt ist.

4. Wellenverbindung nach Anspruch 3,
**dadurch gekennzeichnet, dass** die Breite der Ringnut (15) jeweils kleiner ist als die Breite der beiden Außenverzahnungen (6, 6').

5. Wellenverbindung nach einem der Ansprüche 1 bis 4,
**dadurch gekennzeichnet, dass** das Wellenrohr (4) einen gleichbleibenden Durchmesser über der Länge aufweist.

6. Wellenverbindung nach einem der Ansprüche 1 bis 5,
**dadurch gekennzeichnet, dass** der Verbindungabschnitt (7) des Wellenrohrs (4) einen kleineren Durchmesser (D7) hat als ein mit axialem Abstand zum Verbindungsabschnitt (7) liegender Rohrabschnitt (14) des Wellenrohrs (4).

7. Wellenverbindung nach einem der Ansprüche 1 bis 6,
**dadurch gekennzeichnet, dass** der Außendurchmesser des Wellenrohres (4) größer ist als der größte Außendurchmesser (D3) des Anschlusselements (3).

8. Wellenverbindung nach einem der Ansprüche 1 bis 7,
**dadurch gekennzeichnet, dass** die Festigkeit des Wellenrohres (4) kleiner ist als die Festigkeit der Außenverzahnung (6).

9. Wellenverbindung nach einem der Ansprüche 1 bis 8,
**dadurch gekennzeichnet, dass** das Wellenrohr (4) aus einem Leichtmetallwerkstoff, insbesondere Aluminium, und, dass das Anschlusselement (3) aus einem Stahlwerkstoff hergestellt ist.

10. Wellenverbindung nach einem der Ansprüche 1 bis 9,
**dadurch gekennzeichnet, dass** die Verzahnung (6, 8) zwischen dem Anschlusselement (3) und dem Wellenrohr (4) einen mittleren Durchmesser und eine axiale Länge (L6) aufweist, wobei das Verhältnis von mittlerem Durchmesser und der axialen Länge (L6) größer ist als 2,0, insbesondere größer ist als 2,5.

11. Wellenverbindung nach einem der Ansprüche 1 bis 10,
**dadurch gekennzeichnet, dass** ein Armierungsring (19) außen auf dem Verbindungsabschnitt (7) des Wellenrohres (4) vorgesehen ist.

12. Wellenverbindung nach einem der Ansprüche 1 bis 11,
**dadurch gekennzeichnet, dass** das Anschlusselement (3) an dem zum Verbindungsabschnitt (5) entgegengesetzten Ende eine Wellenverzahnung (11) zum Einstecken in eine entsprechende Gegenverzahnung eines Anschlussbauteils aufweist.

13. Antriebswelle mit einer Wellenverbindung nach einem der Ansprüche 1 bis 12.

14. Antriebswelle nach Anspruch 13,
**dadurch gekennzeichnet, dass** die Antriebswelle an dem zum Anschlusselement (3) entgegengesetzten Ende ein zweites Anschlusselement (3') aufweist, das fest mit dem zweiten Endabschnitt des Wellenrohrs (4) verbunden ist.

## Claims

1. Shaft connection, in particular for a driveline of a motor vehicle, comprising:
a shaft tube (4) made of a metal material,
a connecting element (3) made of a metal material, wherein a connecting portion (5) of the connecting element (3) is connected with a connecting portion (7) of the shaft tube (4),
wherein the shaft tube (4) comprises an axial connecting section (10, 10') which is formed radially inwards into a section (9, 9') of the connecting portion (5) of the connecting element (3) such that an interlocking axial connection effective in axial direction is formed between the shaft tube (4) and the connecting element (3) for transmitting axial forces,
**characterised in**
**that** the connecting portion (5) of the connecting element (3) comprises an outer toothing (6) that is pressed into the connecting portion (7) of the shaft tube (4) with a press fit, wherein an interlocking connection effective in circumferential direction is formed between the shaft tube (4) and the connecting element (3) for transmitting torque,
wherein the connecting element (3) comprises a greatest outer diameter (D3) in the region of the outer toothing (6), and
wherein the interlocking axial connection is configured such that it can absorb axial forces of up to 5 kN without damage.

2. Shaft connection according to claim 1,
**characterised in that** the interlocking axial connection is effective in both axial directions (S1, S2).

3. Shaft connection according to any of claims 1 or 2,
**characterised in that** the connecting portion (5) comprises two axially adjacent outer toothings (6, 6'), between which a circumferential annular groove (15) is formed, into which groove the axial connecting portion (10, 10') of the shaft tube (4) is formed.

4. Shaft connection according to claim 3,
**characterised in that** the width of the annular groove (15) is respectively smaller than the width of the two outer toothings (6, 6').

5. Shaft connection according to any of claims 1 to 4,
**characterised in that** the shaft tube (4) has a constant diameter over the length.

6. Shaft connection according to any of claims 1 to 5,
**characterised in that** the connecting portion (7) of the shaft tube (4) has a smaller diameter (D7) than a tube portion (14) of the shaft tube (4) axially spaced from the connecting portion (7).

7. Shaft connection according to any of claims 1 to 6,
**characterised in that** the outer diameter of the shaft tube (4) is larger than the greatest outer diameter (D3) of the connecting element (3).

8. Shaft connection according to any of claims 1 to 7,
**characterised in that** the strength of the shaft tube (4) is smaller than the strength of the outer toothing (6).

9. Shaft connection according to any of claims 1 to 8,
**characterised in that** the shaft tube (4) is made of a light metal material, in particular aluminium, and **in that** the connecting element (3) is made of a steel material.

10. Shaft connection according to any of claims 1 to 9,
**characterised in that** the toothing (6, 8) between the connecting element (3) and the shaft tube (4) has an average diameter and an axial length (L6), wherein the ratio of the average diameter to the axial length (L6) is greater than 2.0, in particular greater than 2.5.

11. Shaft connection according to any of claims 1 to 10,
**characterised in that** a reinforcing ring (19) is provided externally on the connecting portion (7) of the shaft tube (4).

12. Shaft connection according to any of claims 1 to 11,
**characterised in that** the connecting element (3) comprises, at the end opposite to the connecting portion (5), a shaft toothing (11) for insertion into a corresponding counter-toothing of a connecting component.

13. Drive shaft with a shaft connection according to any of claims 1 to 12.

14. Drive shaft according to claim 13,
**characterised in that** the drive shaft comprises, at the end opposite to the connecting element (3), a second connecting element (3') fixedly connected to the second end portion of the shaft tube (4).

## Revendications

1. Liaison d'arbre, en particulier pour une chaîne de transmission d'un véhicule, comprenant :
un tube d'arbre (4) en matériau métallique,
un élément de raccordement (3) en matériau métallique, dans laquelle un tronçon de liaison (5) de l'élément de raccordement (3) est relié à un tronçon de liaison (7) du tube d'arbre (4),
dans laquelle le tube d'arbre (4) présente une région de liaison axiale (10, 10') qui est formée radialement vers l'intérieur dans une région partielle (9, 9') du tronçon de liaison (5) de l'élément de liaison (3), de telle façon qu'entre le tube d'arbre (4) et l'élément de raccordement (3), une liaison axiale agissant par complémentarité de formes dans le sens axial est formée pour transmettre des forces axiales,
**caractérisée en ce que**
le tronçon de liaison (5) de l'élément de raccordement (3) présente un engrènement externe (6) qui est comprimé dans le tronçon de liaison (7) du tube d'arbre (4) par adaptation par compression, dans laquelle une liaison agissant par complémentarité de formes dans le sens périphérique pour transmettre le couple de rotation est formée entre le tube d'arbre (4) et l'élément de raccordement (3),
dans laquelle l'élément de raccordement (3) présente un plus grand diamètre extérieur (D3) au niveau de l'engrènement extérieur (6), et
dans laquelle la liaison axiale en complémentarité de formes est ainsi formée que celle-ci peut absorber sans dommage des forces axiales allant jusqu'à 5 kN.

2. Liaison d'arbre selon la revendication 1, **caractérisé en ce que** la liaison axiale par complémentarité de formes est active dans les deux sens axiaux (S1, S2).

3. Liaison d'arbre selon l'une des revendications 1 ou 2, **caractérisée en ce que** le tronçon de liaison (5) présente deux engrènements extérieurs (6, 6') voisins entre lesquels est formée une rainure annulaire (15) périphérique dans laquelle est formé le tronçon de liaison axiale (10, 10') du tube d'arbre (4).

4. Liaison d'arbre selon la revendication 3, **caractérisée en ce que** la largeur de la rainure annulaire (15) est respectivement inférieure à la largeur des deux engrènements extérieurs (6, 6').

5. Liaison d'arbre selon l'une des revendications 1 à 4, **caractérisée en ce que** le tube d'arbre (4) présente un diamètre constant sur la longueur.

6. Liaison d'arbre selon l'une des revendications 1 à 5, **caractérisée en ce que** le tronçon de liaison (7) du tube d'arbre (4) présente un plus petit diamètre (D7) qu'un tronçon de tube (14) du tube d'arbre (4) reposant avec un écart axial par rapport au tronçon de liaison (7).

7. Liaison d'arbre selon l'une des revendications 1 à 6, **caractérisée en ce que** le diamètre extérieur du tube d'arbre (4) est plus grand que le plus grand diamètre extérieur (D3) de l'élément de raccordement (3).

8. Liaison d'arbre selon l'une des revendications 1 à 7, **caractérisée en ce que** la solidité du tube d'arbre (4) est inférieure à la solidité de l'engrènement extérieur (6).

9. Liaison d'arbre selon l'une des revendications 1 à 8, **caractérisée en ce que** le tube d'arbre (4) est fabriqué dans un matériau de métal léger, en particulier de l'aluminium, et que l'élément de raccordement (3) est fabriqué dans un matériau d'acier.

10. Liaison d'arbre selon l'une des revendications 1 à 9, **caractérisée en ce que** l'engrènement (6, 8) présente entre l'élément de raccordement (3) et le tube d'arbre (4) un diamètre moyen et une longueur axiale (L6), dans lequel le rapport du diamètre moyen et de la longueur axiale (L6) est supérieur à 2,0, en particulier supérieur à 2,5.

11. Liaison d'arbre selon l'une des revendications 1 à 10, **caractérisée en ce qu'**une bague d'armature (19) est prévue sur l'extérieur du tronçon de liaison (7) du tube d'arbre (4).

12. Liaison d'arbre selon l'une des revendications 1 à 11, **caractérisée en ce que** l'élément de raccordement (3) présente à l'extrémité opposée au tronçon de liaison (5), un engrènement d'arbre (11) pour l'insertion dans un contre-engrènement correspondant d'une pièce de raccordement.

13. Arbre d'entraînement comprenant une liaison d'arbre selon l'une des revendications 1 à 12.

14. Arbre d'entraînement selon la revendication 13, **caractérisé en ce que** l'arbre d'entraînement présente à l'extrémité opposée à l'élément de raccordement (3), un second élément de raccordement (3') qui est relié fixement au second tronçon d'extrémité du tube d'arbre (4) .
